# EUROPEAN PATENT APPLICATION

(11) **EP 1 424 788 A1**
(43) Date of publication of application: **02.06.2004**
(21) Application number: 01961330.6
(22) Date of filing: 03.09.2001
(51) Int. Cl.: H04B 7/005

(54) **TRANSMISSION POWER CONTROL METHOD IN WIRELESS MOBILE DEVICE**

(71) Applicant: MITSUBISHI DENKI KABUSHIKI KAISHA, Tokyo 100-8310 (JP)
(72) Inventor: SHIMIZU, Hirokazu, Chiyoda-ku, Tokyo 100-8310 (JP)
(74) Representative: Popp, Eugen, Dr.
(86) International application number: PCT/JP2001/007625
(87) International publication number: WO 2003/021809

(57) **Abstract**

In code division multiple access (CDMA) mobile communications system in banding-over allowing wireless mobile station to be connected to a plurality of base stations simultaneously the mobile station uses transmission power control (TPC) information received from each base station to control transmission power and when the information is not reliable (SP1) a link's quality (a signal to interference ratio (SIR)) is compared with a threshold and until the quality exceeds the threshold and the information recovers in reliability the transmission power is controlled to have a fixed level to present the transmission power from attaining maximal transmission power (SP2).

## Description

### Technical Field

The present invention relates to methods of transmission power control in wireless mobile station and particularly to those of transmission power control in a code division multiple access (W-CDMA) mobile phone that can reduce interference by reducing unnecessary transmission power when transmission power control (TPC) information is not reliable.

### Background Art

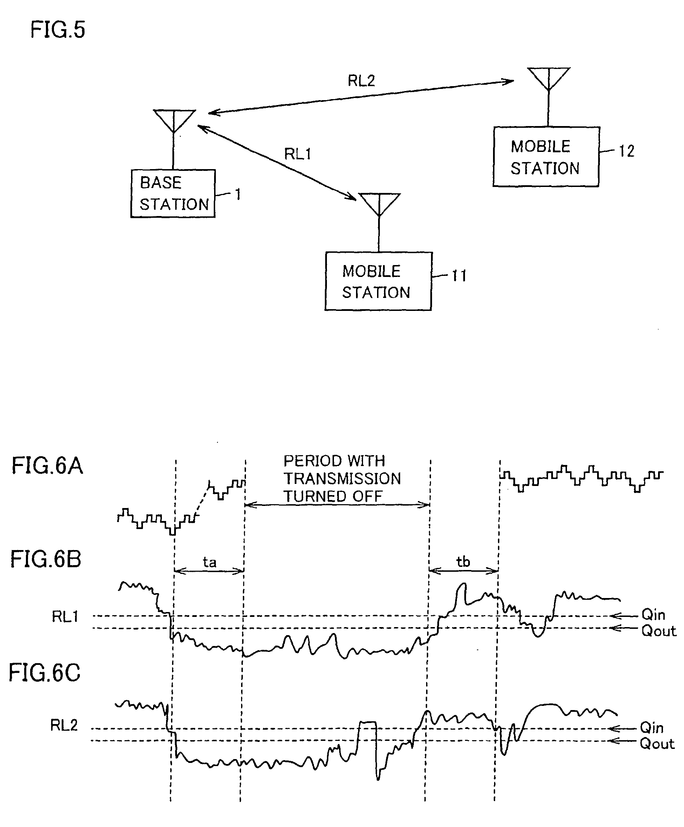

In the W-CDMA system, transmission power control is provided between a base station 1 and mobile station 11, 12, as shown in Fig. 5. More specifically, mobile station 11 is located relatively close to base station 1 and mobile station 12 is located relatively remote from base station 1 for the sake of illustration. If mobile station 11 and 12 both provide transmission with large power, the remote mobile station 12 would regard the transmission power of the closer mobile station 12 as interference, and a link's quality (a signal to interference ratio (SIR)) is reduced and satisfactory communication with base station 1 would not be provided. To equalize each mobile station's quality in reception, as observed by the base station, with the others', transmission power control is effected to reduce the transmission power of mobile station 11 located closer to the base station and increase that of mobile station 12 located remote from the base station (the issue of proximateness-remoteness). This transmission power control using a TPC command is generally referred to as "inner loop control" and it is effected for each slot. Furthermore, a unit of communication channel that is active by connecting base station 1 and for example each mobile station 11, 12 is referred to as a "radio link (RL)".

According to TS25. 214 (Ver3.3.0) "5.1.2.2.1.1. Out of synchronization handling" specification in 3GPP Change request TS25. 214CR130rl standard, if mobile station 11 communicates with the base station through RL1 and a decision is made that a link has quality lower than a reference value Qout, as shown in Fig. 6B, synchronization monitoring is effected for a synchronization monitoring period ta = 160 msec and if the quality does not recover during the period the transmission of interest is turned off. Reception meanwhile continues, and when the quality exceeds a reference value Qin the transmission is turned on (or resumed) and resumed with previous transmission power. This down link's quality is determined by a reference value corresponding to an SIR level, a symbol pattern or the like. It is determined by a value of no more than the SIR level or an erroneous pattern. Similarly, when mobile station 12 communicates with base station 1 through RL2 a link's quality is determined at a timing, as shown in Fig. 6C, to control transmission power.

For the 160 msec period, as a link has decreasing quality, downward TPC information is expected to be impaired in reliability. However, as the current, upward transmission power control, no clear definition is provided in the specification. As such, in the latter half of the 160 msec period, maximal transmission power may be reached. If maximal transmission power is used to effect transmission for a long period of time it results in interference with a different mobile station and provides an impaired SIR when the base station receives an up signal from the mobile station.

In connection therewith, Japanese Patent Laying-Open No. 9-312609 describes that SIRs received from base stations are calculated and composited and thereafter if an SIR received from a base station is no more than a reference value, transmission power information received from the base station is ignored and the current TPC information is maintained, so that if a received SIR is low and transmission power control information is not reliable, transmission power can be free of accordingly erroneous reduction impairing communication in quality.

The document, however, fails to refer to the issue of maximal transmission power, as described above.

### Disclosure of the Invention

Therefore a main object of the present invention is to provide a method of transmission power control in wireless mobile station that can reduce unnecessary interference after impaired quality of a link is detected and before transmission is disconnected.

The present invention provides a method of transmission power control in code division multiple access wireless mobile station receiving transmission power control information from a base station and using the information to control transmission power of the mobile station, characterized in that when the information is not reliable the transmission power of the mobile station is controlled to have a constant level lower than maximal transmission power to prevent stray transmission power.

As such in accordance with the present invention when impaired quality of a link is detected, transmission power can prevented from substantially attaining maximal transmission power. Unnecessary interference can thus be reduced during a period elapsing before transmission is disconnected.

Furthermore in another invention there is provided a method of transmission power control in code division multiple access wireless mobile station receiving transmission power control information from a base station and using the information to control transmission power of the mobile station, characterized in that when the information is not reliable the transmission power of the mobile station is controlled to have a constant level lower than immediately preceding transmission power.

Furthermore in another invention there is provided a method of transmission power control in code division multiple access wireless mobile station receiving transmission power control information from a base station and using the information to control transmission power of the mobile station, characterized in that when the information is not reliable the transmission power of the mobile station is controlled to have a level lower than maximal transmission power and higher than immediately preceding transmission power of the mobile station.

Furthermore in another invention there is provided a method of transmission power control in code division multiple access wireless mobile station receiving transmission power control information from a base station and using the information to control transmission power of the mobile station, characterized in that when the information is not reliable an evaluated propagation environment is based on to control the transmission power of the mobile station.

Furthermore the propagation environment is evaluated from any of: a distance of the mobile station from the base station; variation of a level of reception from the base station; mobility of the mobile station; phasing; delay spread; and quality of a link.

Furthermore a quality of a link receiving data from the base station is based on to detect reliability of the information.

### Brief Description of the Drawings

In the drawings:
Fig. 1 is a schematic block diagram of a W-CDMA mobile phone of one embodiment of the present invention;
Fig. 2 is a flowchart for illustrating an operation of one embodiment of the present invention;
Fig. 3 represents information required for controlling one embodiment of the present invention;
Figs. 4A-4F are waveform diagrams for illustrating an operation of one embodiment of the present invention;
Fig. 5 represents communication between two base stations and one wireless mobile station; and
Figs. 6A-6C are waveform diagrams of conventional TPC.

### Best Modes for Carrying Out the Invention

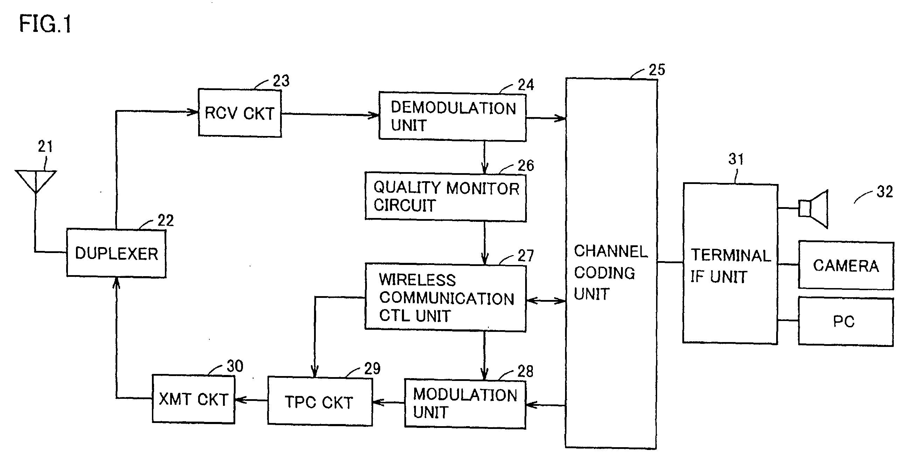

Fig. 1 is a schematic block diagram of a W-CDMA mobile phone of one embodiment of the present invention.

In the figure an antenna 21 is connected to a receive circuit 23 and transmit circuit 30 via a duplexer 22. Receive circuit 23 receives a radio frequency (RF) signal from a base station, converts it to a baseband signal and outputs it to a demodulation unit 24. Demodulation unit 24 subjects the baseband signal to despreading-demodulation, Rake synthesis and the like and outputs it to a channel coding unit 25 effecting a, physical format conversion involved in reception, error correction and detection including interleave, and the like.

A quality monitor circuit 26 compares with a threshold value a signal output from demodulation unit 24, monitors a link's quality, and provides an output to wireless communication control unit 27 which provides protocol control for wireless communication, controls channel coding unit 25 and communicates with a terminal IF unit 31 having a camera, a personal computer, or other similar functions for user IF.

A modulation unit 28 receives a signal from channel coding unit 25 and modulates and outputs it to a transmission power control (TPC) circuit 29 which controls transmission power in response to a control signal provided from wireless communication control unit 27. Transmit circuit 30 allows a transmit signal controlled in transmission power to be passed through duplexer 22 and sent from antenna 21.

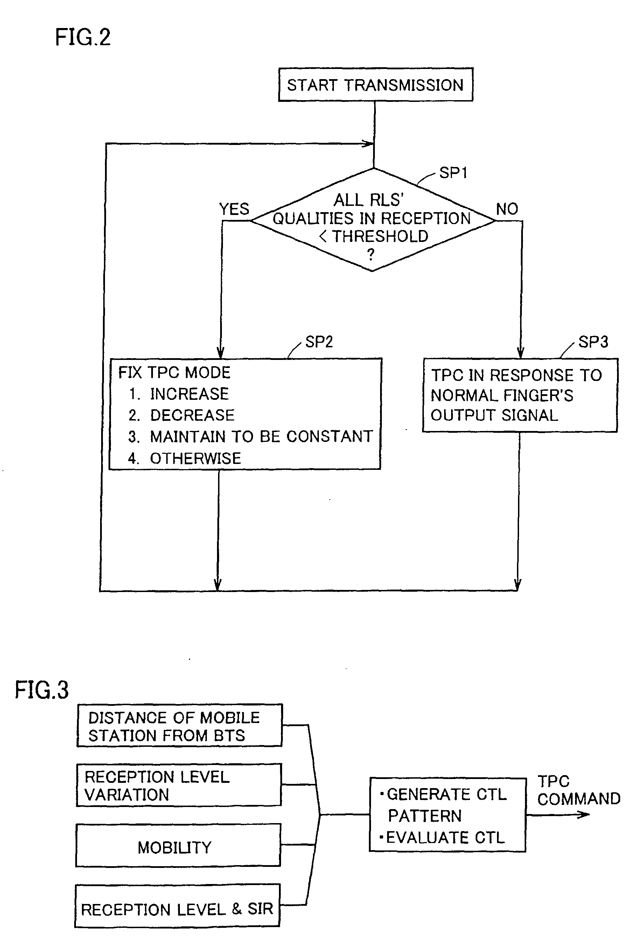

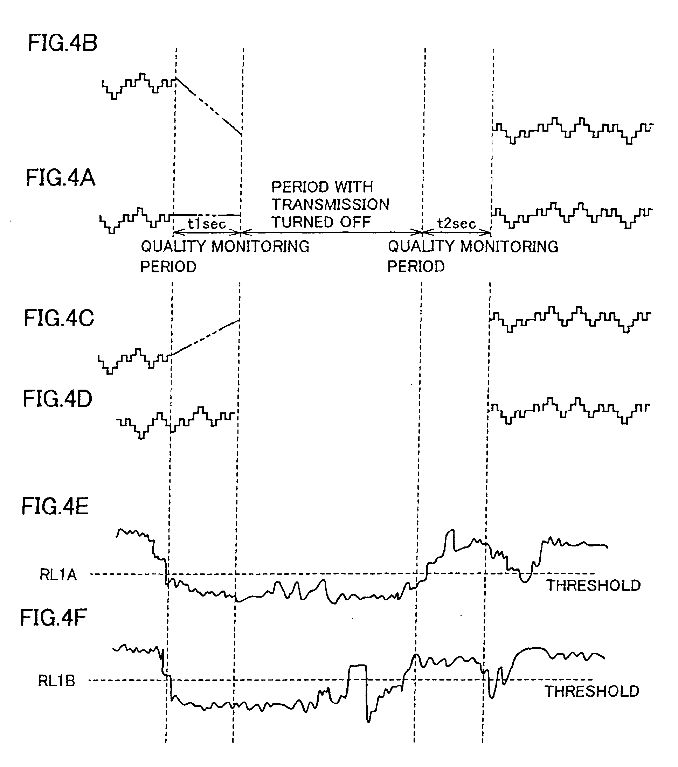

Fig. 2 is a flowchart for illustrating an operation of one embodiment of the present invention. Fig. 3 represents information required for controlling one embodiment of the present invention. Figs. 4A-4D are waveform diagrams for illustrating an operation of transmission power control of one embodiment of the present invention and Figs. 4E and 4F are waveform diagrams for illustrating that in accordance with the present invention in one embodiment how an RL's quality in reception varies.

TPC circuit 29 shown in Fig. 1 normally effects transmission power control based on TPC information designated in a base station obtained from a channel of at least one RL at least having at least required reliability. More specifically, quality monitor circuit 26 shown in Fig. 1 compares a signal output from demodulation unit 24 with a threshold value to monitor a link's quality. At step (SP) 1 quality monitor circuit 26 makes a decision as to whether each RL's quality in reception is lower than a threshold value. If not or the quality is satisfactory then at SP 3 transmission power control is effected, as described in the conventional example, in accordance with the 3GGP specification typically in response to a normal finger's output signal.

If at SP 2 quality monitor circuit 26 has made a decision that the link has impaired quality, i.e., that for example in Fig. 4E at an RL1A's quality monitoring period t1, quality in reception is lower than a threshold value, then transmission power is controlled not to be maximal. As one example thereof, transmission power control is shifted to a fixed control mode.

As shown in Fig. 4A, if quality monitor circuit 26 detects that a link has impaired quality, a control by increasing or decreasing transmission power in accordance with TPC information is suspended until the quality is improved. Specifically, the step of increasing or decreasing transmission power for each slot is set to be zero to fix transmission power to have a fixed value. For example, transmission power of -30 dBm does not reach a maximum of -24 dBm, and after several steps it can be set to be approximately -20 dBm to reduce interference with a different mobile station.

Again, for example as shown in Fig. 4F, in a quality monitoring period t2 when the quality of a link of RL1B exceeds a threshold value for a duration of no less than t sec an upper layer determines that the link is "in synchronization" and TPC information output from the finger is again used to control transmission power.

Thus once a decision has been made that TPC reliability is low and quality is impaired, unnecessary control is avoided, and until downward information recovers in reliability, fixed power is provided to minimize unnecessary interference with wireless resources to effectively utilize wireless resources. Furthermore, simply setting at zero the step of increasing or decreasing transmission power allows control to be advantageously simplified.

In the above embodiment when a link has impaired quality, transmission power is fixed. Alternatively, transmission power may be controlled to be increased or decreased to consider a condition. For example, as shown in Fig. 4B, a transmission level is decreased for every one or several slots. This can advantageously in the least reduce impaired quality of a link to a different mobile station.

Furthermore, as another example, with reference to Fig. 4C, Once quality monitor circuit 26 has detected that a link has impaired quality, transmission power or level is controlled to be increased for every one or several slots.. This has an advantage lying in that an up transmission level is increased to allow an instruction to reach a base station to have the base station increase down transmission power to ensure communication of the mobile station of interest.

Alternatively, as shown in Fig. 4D, a propagation environment may be evaluated and a transmission level may be controlled.

As information for evaluating a transmission level, as shown in Fig. 3, mobile station's distance from a base station, reception level variation, mobility, phasing, delay spread, reception level and the like and SIR may be based on to generate a control pattern and evaluate transmission power control.

### Industrial Applicability

In accordance with the present invention wireless mobile station uses TPC information received from a plurality of base stations to control transmission power and if the TPC information from base station is not reliable a link's quality (i.e. SIR) is compared with a threshold value and until the quality exceeds the threshold value and the TPC information recovers in reliability, transmission power is controlled to have a fixed level to avoid maximal transmission power so that the present invention can be applicable to a W-CDMA mobile phone.

## Claims

1. A method of transmission power control in code division multiple access wireless mobile station receiving information of said transmission power control from a base station and using said information to control transmission power of said mobile station, **characterized in that** when said information is not reliable said transmission power of said mobile station is controlled to have a constant level lower than maximal transmission power (SP1, SP2).

2. The method according to claim 1, **characterized in that** a quality of a link receiving data from said base station is based on to detect reliability of said information.

3. A method of transmission power control in code division multiple access wireless mobile station receiving information of said transmission power control from a base station and using said information to control transmission power of said mobile station, **characterized in that** when said information is not reliable said transmission power of said mobile station is controlled to have a constant level lower than immediately preceding transmission power (SP1, SP2).

4. The method according to claim 3, **characterized in that** a quality of a link receiving data from said base station is based on to detect reliability of said information.

5. A method of transmission power control in code division multiple access wireless mobile station receiving information of said transmission power control from a base station and using said to control transmission power of said mobile station, **characterized in that** when said information is not reliable said transmission power of said mobile station is controlled to have a level lower than maximal transmission power and higher than immediately preceding transmission power of said mobile station (SP1, SP2).

6. The method according to claim 5, **characterized in that** a quality of a link receiving data from said base station is based on to detect reliability of said information.

7. A method of transmission power control in code division multiple access wireless mobile station receiving information of said transmission power control from a base station and using said to control transmission power of said mobile station, **characterized in that** when said information is not reliable an evaluated propagation environment is based on to control said transmission power of said mobile station (SP1, SP2).

8. The method according to claim 7, **characterized in that** said environment is evaluated from any of: a distance of said mobile station from said base station; variation of a level of reception from said base station; mobility of said mobile station; phasing; delay spread; and quality of a link.

9. The method according to claim 7, **characterized in that** a quality of a link receiving data from said base station is based on to detect reliability of said information.
